Europäisches Patentamt

European Patent Office

Office européen des brevets

(11) Veröffentlichungsnummer: **0 348 701 B1**

## (12) EUROPÄISCHE PATENTSCHRIFT

(45) Veröffentlichungstag der Patentschrift: **23.12.92**

(51) Int. Cl.5: **G01B 7/02**, G01D 3/04

(21) Anmeldenummer: **89110254.3**

(22) Anmeldetag: **07.06.89**

(54) **Vorrichtung zur Abstandsmessung.**

(30) Priorität: **17.06.88 CH 2344/88**

(43) Veröffentlichungstag der Anmeldung:
**03.01.90 Patentblatt 90/01**

(45) Bekanntmachung des Hinweises auf die
Patenterteilung:
**23.12.92 Patentblatt 92/52**

(84) Benannte Vertragsstaaten:
**CH DE FR GB IT LI**

(56) Entgegenhaltungen:
EP-A- 0 049 304
GB-A- 2 138 145
US-A- 3 252 084
US-A- 3 619 805
US-A- 3 883 796

PATENT ABSTRACTS OF JAPAN, Band 9, Nr.
203 (P-381)[1926], 21. August 1985, Seite 120
P 381; & JP-A-60 67 819 (HITACHI SEISAKUS-
HO K.K.) 18-04-1985

(73) Patentinhaber: **VIBRO-METER SA**
**Route de Moncor 4**
**CH-1700 Fribourg(CH)**

(72) Erfinder: **Dubey, Pierre**
**Ch. du Pontet**
**CH-1782 Belfaux(CH)**

(74) Vertreter: **Keller, René, Dr. et al**
**Patentanwälte Dr. René Keller & Partner**
**Postfach 12**
**CH-3000 Bern 7(CH)**

# Beschreibung

Die Erfindung bezieht sich auf eine Vorrichtung zur Abstandsmessung der im Oberbegriff des Patentanspruchs 1 angegebenen Gattung.

Bei solchen Vorrichtungen ist die Spule üblicherweise die Schwingkreisspule eines Hochfrequenzoszillators, wobei sie das von ihrer Dämpfung abhängige Hochfrequenzsignal liefert. Die Dämpfung beruht auf dem Wirkwiderstand der Spule, der teilsweise durch die Wirbelstromverluste im Objekt, die auf die Spule zurückwirken, und im übrigen durch den Gleichstromwiderstand der Spule verursacht ist, der von der Temperatur der Spule abhängt.

Der Vorteil der Abstandsmessung mit Vorrichtungen vorliegender Gattung besteht wesentlich darin, dass es genügt, am Messort nur die Spule anzuordnen, während der Oszillator und die Auswerteschaltung in einer gewissen Entfernung vom Messort betrieben werden können, insbesondere bei Raumtemperatur, während die Spule am Messort einer höheren (oder tieferen) Temperatur ausgesetzt ist, bei der die anderen Teile der Vorrichtung nicht betrieben werden könnten, besonders wenn sie mit Halbleiterelementen ausgerüstet sind.

Bei erheblich von der Raumtemperatur abweichenden Temperaturen ist jedoch der Einfluss der Temperatur auf den Anteil der Dämpfung, der durch den Gleichstromwiderstand der Spule verursacht ist, nicht mehr vernachlässigbar, so dass das Hochfrequenzsignal sowohl vom Abstand des Objekts von der Spule als auch von der Temperatur derselben abhängt. Beispielsweise steigt der Gleichstromwiderstand der Spule bei einer Temperaturerhöhung um 250 °C auf ungefähr das Doppelte.

Um die Abhängigkeit des aus dem Hochfrequenzsignal erhaltenen Abstandssignals von der Temperatur zu vermeiden, wurde vorgeschlagen, mittels einer die Spule speisenden Gleichstromquelle ein von der Spulentemperatur abhängiges Gleichstromsignal zu erzeugen und zur Kompensation des Einflusses der Temperatur auf das Abstandssignal zu verwenden.

Das Gleichspannungssignal kann als Spannungsabfall eines durch die Spule fliessenden konstanten Gleichstroms erhalten werden.

Aus der EP-A-0 049 304 ist eine Vorrichtung dieser Gattung bekannt, bei der ein aus dem Hochfrequenzsignal erhaltenes Signal und ein aus dem Gleichstromsignal erhaltenes Signal einem Summierglied zugeführt sind, welches als Summensignal das Abstandssignal liefert. Wenn sich bei dieser bekannten Vorrichtung die Temperatur der Spule ändert, ändern sich das Gleichstromsignal und das daraus erhaltene, dem Summierglied zugeführte Signal. Die Folge ist eine entsprechende Aenderung des als Summensignal von dem Summierglied erhaltenen Abstandssignals auch dann, wenn der Abstand der Spule vom Objekt unverändert geblieben ist, d. h. das Abstandssignal ändert sich bei konstantem Abstand mit der Temperatur.

Durch die Erfindung, wie sie im Patentanspruch 1 gekennzeichnet ist, wird die Aufgabe gelöst, eine Vorrichtung zur Abstandsmessung mit verbesserter Temperaturkompensation zu schaffen.

Bei der erfindungsgemässen Vorrichtung wird die im temperaturabhängigen Gleichstromwiderstand der Spule verloren gehende Energie stets aus der entsprechend temperaturgesteuerten Hochfrequenzstromquelle gedeckt, so dass das von der Spule erzeugte magnetische Wechselfeld unabhängig von der Temperatur ist.

Aus der japanischen Patentanmeldung Nr. 67819/1985 ist ein induktives Abstandsmessgerät bekannt, welches einen vierpoligen Abstandssensor und eine Ansteuerschaltung mit einer Temperaturkompensation aufweist. Der Abstandssensor ist in der Art eines kleinen Transformators ausgebildet, welcher auf der Primärseite eine Erregerspule und auf der Sekundärseite zwei differenziell geschaltete Detektorspulen aufweist. Das Messgerät hat zwei Betriebszustände. Im einen wird der Abstand detektiert und im anderen die Temperaturkompensation durchgeführt. Bei der Abstandsmessung wird auf die Erregerspule ein hochfrequenter Wechselstrom gegeben. An den sekundärseitigen Spulen lässt sich dann der abstandsabhängige Kopplungsgrad abnehmen und mit einer Schaltung auswerten. Um die Temperatur zu kompensieren, wird mit geeigneten Schaltern der die Primärseite anregende Oszillator abgekoppelt und die Sekundärseite an eine Widerstandsmessschaltung angeschlossen. Der ermittelte Widerstandswert wird mit einem Referenzwert verglichen und das Differenzsignal wird zur Anpassung der Spannung des Oszillators verwendet. Bei langsamen Temperaturänderungen muss selten umgeschaltet werden und bei starken Temperaturen entsprechend öfters.

Wie weiter oben erwähnt, ist bei der erfindungsgemässen Vorrichtung das magnetische, hochfrequenzte Wechselfeld der Spule unabhängig von der Temperatur. Dabei wird die Dämpfung der Spule durch das Objekt stets unter denselben Bedingungen beeinflusst, und es entsteht ein Hochfrequenzsignal, das nur vom Abstand des Objekts von der Spule abhängt.

Im folgenden wird die Erfindung einschliesslich besonderer Ausführungsarten anhand der nur einen Ausführungsweg darstellenden, beiliegenden Zeichnungen näher erläutert. Es zeigen:

Fig. 1    ein Blockdiagramm,
Fig. 2    das detaillierte Schaltbild einer erfindungsgemässen Vorrichtung und

Fig. 3 bis 5    je einem Messkopf.

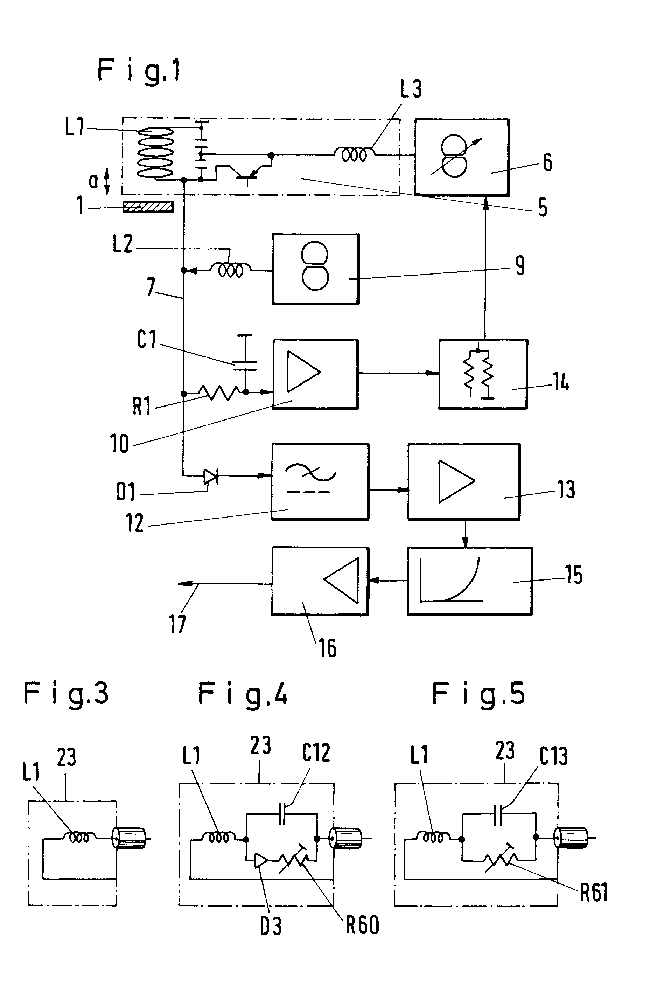

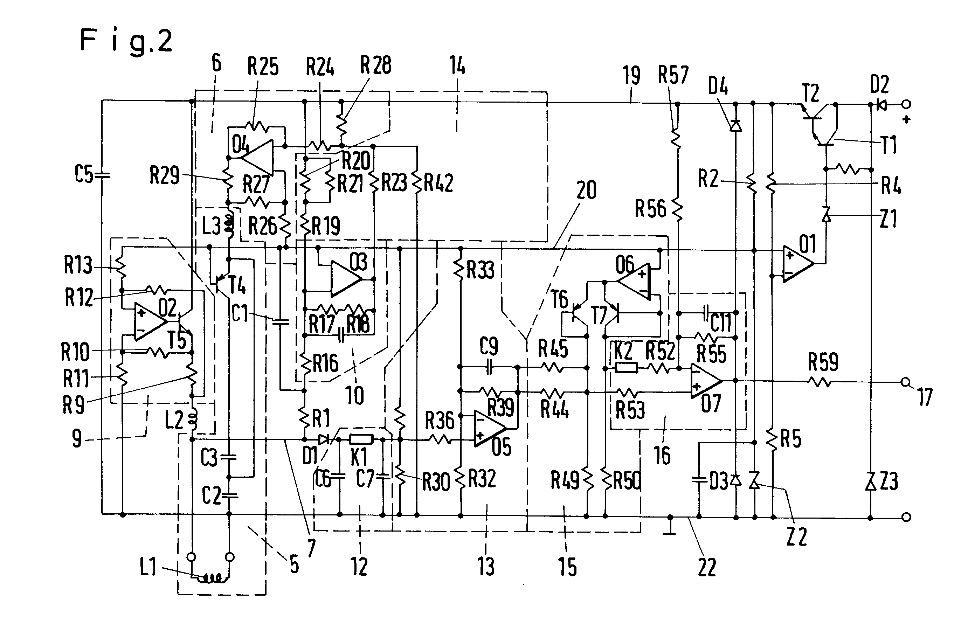

Mit der Vorrichtung wird ein vom Abstand a eines Objekts 1 von einer hochfrequent erregten Spule L1 abhängiges Signal erzeugt. Dazu ist das Objekt 1 an einer Stirnseite der Spule L1 angeordnet und, falls es nicht selbst elektrisch (oder magnetisch) leitend ist, mit einem (nicht dargestellten) Belag dieser Eigenschaften versehen. Wie im Prinzip aus Fig. 1 und im einzelnen aus Fig. 2 ersichtlich, ist die Spule L1 die Schwingkreisspule eines Hochfrequenzoszillators 5, dessen Hochfrequenzspannung an einer Leitung 7 liegt, an die eine Diode D1 mit nachfolgendem Glättungsglied 12 angeschlossen ist. Da die Rückwirkung der im Objekt 1 induzierten Wirbelströme auf die Spule L1 die Dämpfung des Oszillator-Schwingkreises in einem vom Abstand a abhängigen Masse erhöht und dadurch dessen Hochfrequenzspannung herabsetzt, ist die Ausgangsspannung des Glättungsgliedes 12 ein von dem Abstand a abhängiges Signal.

Die Dämpfung des Schwingkreises hängt auch vom Gleichstromwiderstand der Spule L1 ab, der temperaturabhängig ist. Damit hängt die Ausgangsspannung des Siebgliedes 12 zusätzlich auch von der Temperatur der Spule L1 ab.

Um den Einfluss der Temperatur auf die Ausgangsspannung des Siebgliedes 12 zu kompensieren, ist dem durch die Spule L1 fliessenden Hochfrequenzstrom ein Gleichstrom einer Konstantstromquelle 9 überlagert, und der Spannungsabfall des Gleichstroms an der Spule L1, liegt als Eingangsgrösse an einer Steuerschaltung 10, 14, 6, welche den den Oszillator speisenden Gleichstrom in Abhängigkeit von dem Gleichspannungsabfall steuert und dadurch temperaturbedingten Aenderungen der Hochfrequenzspannung entgegenwirkt.

Zu diesem Zwecke ist die Konstantstromquelle 9 mit der Leitung 7 durch eine Hochfrequenzdrosselspule L2 verbunden, welche die Hochfrequenz von der Konstantstromquelle 9 fernhält, und die Steuerschaltung weist einen invertierenden Verstärker 10, ein Widerstandsnetzwerk 14 und eine steuerbare Stromquelle 6 auf, die den Oszillator 5 speisenden Gleichstrom liefert. Der Eingang des Verstärkers 10 ist durch ein Hochfrequenzsperre bildendes R-C-Glied R1, C1 mit der Leitung 7 verbunden, dessen Ausgangsspannung am Eingang des Widerstandsnetzwerkes 14 liegt, dessen Ausgang mit dem Steuereingang der Stromquelle 6 verbunden ist. Wenn die Spulentemperatur zunimmt, nimmt der Gleichspannungsabfall an der Spule L1, der am Eingang des Verstärkers 10 liegt, zu. Dabei nimmt dessen Ausgangsspannung und damit die Steuerspannung der steuerbaren Stromquelle 6 zu und ein Verstärker O4 (Fig. 2) der Stromquelle 6, die den Speisegleichstrom des Oszillators 5 liefert, bewirkt eine Erhöhung des Speisestromes und damit der Erregung der Spule L1. Bei einer Abnahme der Spulentemperatur sind die Vorgänge entsprechend umgekehrt. Durch das Netzwerk 14 wird bei im übrigen gegebenen Daten der Schaltungsteile 5, 6, 10 erreicht, dass der Betrag, um den die Steuerschaltung 10, 14, 6 die Hochfrequenzerregung der Spule L1 bei einer Aenderung deren Temperatur ändert, gleich dem Betrag ist, um den sich die Erregung ändern würde, wenn die Steuerschaltung 10, 14, 6 nicht vorhanden wäre. Im Ergebnis ist der Einfluss der Temperatur der Spule L1 auf deren Hochfrequenzerregung kompensiert, so dass die Hochfrequenzspannung und das dieser Spannung entsprechende Signal am Ausgang des Siebgliedes 12 nur vom Abstand des Objekts 1 von der Spule L1 abhängt.

Auf diese Weise wird die den Oszillator 5 speisende Stromquelle 6 zur Kompensation der Temperaturabhängigkeit des Gleichstromwiderstandes der Spule L1 durch das von diesem abhängige Signal am Ausgang des Verstärkers 10 gesteuert.

Wenn der Abstand a bei konstanter Temperatur grösser wird, nimmt die Ausgangsspannung des Glättungsgliedes 12 zu, der Eingang des Verstärkers 13 wird positiver, die Ausgangsspannung des Verstärkers 13 nimmt zu, wodurch der den Oszillator 5 speisende Strom schwächer wird. Im Ergebnis wird ein bei zunehmendem Abstand a zunehmendes Signal an der Ausgangsleitung 17 erhalten, das unabhängig von der Temperatur ist.

Die Abhängigkeit der Hochfrequenzspannung an der Spule L1 vom Abstand a ist nicht linear. Diese Hochfrequenzspannung nimmt bei zunehmendem Abstand a zuerst steil und dann allmählich immer weniger steil zu.

Ein Signal, das praktisch linear vom Abstand a abhängt, kann aus der mittels der Diode D1 gleichgerichteten und im Glättungsglied 12 geglätteten Hochfrequenzspannung durch ein nichtlineares Uebertragungsglied erhalten werden, dessen Ausgangsspannung bei zunehmender Eingangsspannung zuerst weniger steil und dann steiler zunimmt. Halbleiterbauelemente mit Sperrschicht, insbesondere Dioden, haben bekanntlich eine im Bereich kleiner Spannungen mit zunehmender Spannung zuerst weniger steil und dann steiler ansteigende Strom-Spannungs-Charakteristik. Damit kann ein nichtlineares Uebertragungsglied 15 für die gleichgerichtete und geglättete Hochfrequenzspannung erhalten werden, das ein Signal liefert, dessen Abhängigkeit vom Abstand a linear ist.

Die Charakteristik einer Diode ist bei Temperaturschwankungen auch im Bereich der Raumtemperaturen, nennenswerten Aenderungen unterworfen. Deshalb ist bei der Schaltungsanordnung nach Fig. 1 und 2 ein nichtlineares Glied 15 besonderer, im folgenden näher beschriebener Art, bei der die Temperaturabhängigkeit der Diodencharakteristik kompensiert ist, vorgesehen, das mit einem Verstärker 16 zusammenarbeitet, der das gewünschte Signal am Ausgang 17 der Schaltungsanordnung liefert. Dabei ist die Abhängigkeit dieses Signals vom Abstand a linear, und das Signal ist, wie vorher erläutert, unabhängig von der Temperatur der Spule L1, und auch der Einfluss der Temperatur auf die für die Linearisierung massgebende Diodencharakteristik ist, wie weiter unten noch erläutert, kompensiert.

Im folgenden werden Einzelheiten der Schaltungsteile der Schaltungsanordnung anhand Fig. 2 näher erläutert.

Die Stromversorgung der Schaltungsteile 5, 6, 9, 10, 12, 13, 14, 15 und 16 erfolgt an einer Leitung 19 mit z.B. ca. 17,2 Volt und einer Leitung 20 mit z.B. 6,3 Volt bezogen auf Masse 22. Diese Spannungen sind in an sich grundsätzlich bekannter Weise mittels einer Darlingtonschaltung T1, T2, einem Differenzverstärker O1 und zweier Zenerdioden Z1 und Z2 stabilisiert.

Der Hochfrequenzoszillator 5 ist ein Colpitts-Oszillator in Basisschaltung mit einem Transistor T4 und dem durch die Spule L1 und zwei Kondensatoren C2 und C3 gebildeten Schwingkreis, der einerseits mit dem Kollektor des Transistors T4 und der die Hochfrequenz führenden Leitung 7 verbunden ist und andererseits an Masse 22 liegt.

Das Glättungsglied 12 enthält zur Glättung gleichgerichteter Hochfrequenz in bekannter Weise zwei Kondensatoren C6, C7 und einen Widerstand K1, der zur Kompensation von Einflüssen der Temperatur auf die Schaltungsanordnung (ohne Spule L1), insbesondere der Halbleiterdiode D1, als Kaltleiter ausgeführt ist.

Die Konstantstromquelle 9 ist in bekannter Art mit einem Operationsverstärker O2, einem Transistor T5 in Kollektorschaltung und fünf Widerständen R9 bis R13 ausgeführt. Sie liefert den konstanten Gleichstrom an das Hochfrequenz führende, mit der Leitung 7 verbundene Ende der Spule L1. Dieser Strom ist z.B. so bemessen, dass der Gleichspannungsabfall an der Spule L1 bei Raumtemperatur ca. 0,2 Volt beträgt. Dabei ist der ebenfalls durch die Spule L1 fliessende, mit dem Abstand a zwangsläufig ändernde Kollektorstrom des Transistors T4 unbeachtlich. Auch der durch die Widerstände R1, R16, R19, R20/21 und die Spule L1 fliessende Strom fällt dabei nicht ins Gewicht, er ist im übrigen wegen der stabilisierten Spannung an der Leitung 19 auch stabilisiert, wenn auch mit grösseren Abweichungen als der Strom der Konstantstromquelle 9, die ihrerseits mit dieser Spannung gespeist ist.

Die steuerbare Stromquelle 6 enthält als Stellglied für die Gleichstromversorgung des Oszillators 5 einen Operationsverstärker O4 und Widerstände R24 bis R29. Dabei ist die Ausgangsspannung des Widerstandsnetzwerkes 14 die Stellgrösse am Eingang des Operationsverstärkers O4.

Der Verstärker 13 ist ein Operationsverstärker O5, dessen nicht invertierender Eingang durch einen Widerstand R 36 mit dem Ausgang des Siebgliedes 12 verbunden und dessen invertierender Eingang von einem Spannungsteiler R 32, R 33 gespeist ist.

Das Widerstandsnetzwerk 14 enthält einen Widerstand 23, der den Ausgang des Verstärkers 10 mit dem Steuereingang der Stromquelle 6 verbindet, dem noch ein Widerstand R24 vorgeschaltet ist. Durch die Widerstände 28 und 42 wird die erforderliche Vorspannung am invertierenden Eingang des Verstärkers O4 erhalten. Die Widerstände R23 und R42 bewirken zusammen mit dem Widerstand R28, dass die von der Temperatur der Spule L1 abhängige Spannung am Steuereingang der Stromquelle 6 so gross ist, wie für eine möglichst vollständige Kompensation erforderlich.

Die beschriebene Kompensation des Einflusses der Temperatur auf die Hochfrequenzspannung der Spule L1 durch den temperaturabhängigen Gleichstromwiderstand der Spule L1 genügt, wie sich gezeigt hat, nicht mehr, wenn die Spule L1 extremen Temperaturen ausgesetzt ist, beispielsweise 24 °K oder 300 °C. Dann kommen zusätzliche, andere temperaturabhängige Einflüsse auf die Dämpfung und damit auf die Hochfrequenzspannung der Spule L1 zur Wirkung. Beispielsweise könnte es sich um dielektrische Verluste in der Isolation des Spulendrahtes oder um Wirbelstromverluste im (nicht dargestellten) Spulenkörper handeln. Um auch diese zusätzlichen Wirkungen bei der beabsichtigten Temperaturkompensation zu berücksichtigen, kann der die Spule enthaltende Messkopf 23 mit einem Netzwerk D3, R60, C12 nach Fig. 4 ausgerüstet werden. Das geeignete Netzwerk und dessen Elemente, insbesondere die Art der Diode D1 und der Widerstandswert sowie das (temperaturabhängige) Material des Widerstands R60 bzw. R61 können durch Versuche ermittelt werden. Der Widerstandswert von R60 bzw. R61 soll jedoch nicht mehr als 5 %, höchstens 10 % des Gleichstromwiderstandes der Spule L1 betragen. Der Kondensator C12 bzw. C13 ist so zu bemessen, das sein Scheinwiderstand bei der betreffenden Frequenz vernachlässigbar klein ist im Vergleich zum Widerstand der Reihenschaltung D1, R60 bzw. zum Widerstand R61. Seine Kapazität muss ein Vielfaches der Kapazität von C2 und von C3 sein. Wie aus Fig. 4 und 5 ersichtlich, ist das zusätzliche Netzwerk D5, R60, C12 bzw. R61 C13 in Reihe mit der Spule L1 geschaltet, so dass der Messkopf auch bei diesen Ausführung nur zwei Anschlüsse hat, und die Kompensation mit einer einzigen Gleichspannung erfolgt, d. h. die Gleichstromquelle 6 des Oszillators 5 nur von einer alle temperaturbedingte Einflüsse enthaltenen Gleich-

spannung gesteuert ist. Grundsätzlich könnte natürlich auch eine nur vom Gleichstromwiderstand abhängige Spannung und eine durch das Netzwerk bestimmte Spannung auf die Gleichstromquelle 6 wirken.

Das nichtlineare Glied 15 enthält zwei parallel geschaltete Zweige, deren jeder aus einem als Diode geschalteten Transistor T6 bzw. T7 in Reihe mit einem Widerstand R49 bzw. R50 besteht. Transistoren werden verwendet, weil ein derartiges Paar in einem Gehäuse auf einem Halbleitersubstrat, das beide Transistoren auf gleicher Temperatur hält, handelsüblich ist, und wie weiter unten beschrieben, ein derartiges Paar zur Temperaturkompensation eines elektrischen Signals erforderlich ist. Die Zweige T6, R49 und T7, R50 liegen in Fig. 2 am Ausgang eines Operationsverstärkers O6, dessen nicht invertierender Eingang mit der Leitung 20, und dessen invertierender Eingang mit der Basis und dem Kollektor des Transistors T7 verbunden ist. Dieser Operationsverstärker 06 ist grundsätzlich nicht erforderlich, er bewirkt nur eine weitere Verbesserung der Wirkung des nichtlinearen Gliedes 15. Deshalb wird die Wirkungsweise einer Ausführung beschrieben, bei der die Zweige T6, R49 und T7, R50 direkt (ohne Operationsverstärker) an die Leitung 20 angeschlossen sind.

Bei beiden Ausführungen haben die Transistoren T6 und T7 die gleichen Charakteristiken und im Ruhezustand liegen an den Widerständen R 49 und 50 gleiche Spannungsabfälle, so dass im Ruhezustand einander gleiche Spannungen über den als Dioden geschalteten Transistoren T6 und T7 liegen. Der Ausgang des Verstärkers 13 ist durch einen Widerstand 44 mit dem an die Basis und den Kollektor der Transistor T6 angeschlossenen Ende des Widerstands 49 verbunden, so dass die Ausgangsspannung dieses Verstärkers 13 die Spannung an diesem Widerstand 49 erhöht. Dadurch nimmt die Spannung am Transistor T6 zu, wodurch sich dessen Arbeitspunkt an seiner Strom-Spannungscharakteristik verschiebt und der von ihm an den Widerstand R49 gelieferte Strom entsprechend der Charakteristik mehr als proportional zur Ausgangsspannung des Differenzverstärkers 05 abnimmt. Dadurch wird kleineren Aenderungen der Ausgangsspannung des Differenzverstärkers 05 (Schaltungsteil 13) relativ weniger, grösseren Aenderungen relativ stärker entgegengewirkt. Der Grad dieser Entgegenwirkung hängt von der Lage des Arbeitspunktes im Ruhezustand und vom Widerstand 49 ab und kann so bemessen werden, dass die Abhängigkeit der Spannung am Widerstand R49 vom Abstand a praktisch linear ist.

Die Strom-Spannungs-Charakteristik der als Dioden geschalteten Transistoren T6 und T7 ist bereits im Bereich üblicher Raumtemperaturen temperaturabhängig. Dieser Temperatureinfluss ist dadurch kompensiert, dass das dem Transistor T6 zugewandte Ende des Widerstands 49 durch einen Widerstand R53 mit dem nicht invertierenden Eingang und das dem Transistor T7 zugewandte Ende des Widerstandes R50 durch einen Kaltleiter K2 und einem Widerstand R52 mit dem invertierenden Eingang eines Operationsverstärkers O7 verbunden ist, dessen Ausgang das gewünschte, vom Abstand a linear abhängige Signal am Ausgang 17 der Schaltungsanordnung liefert. Dabei ist dieses Signal durch die Differenz der Spannungen an den Widerständen R49 und R50 bestimmt. Die Spannung an R49 ist aus der Hochfrequenzspannung an der Spule L1 hervorgegangen und mittels des Transistors T6 in Bezug auf die Entfernung a linearisiert. Die Spannung an R50 ist ein (vom Abstand a unabhängige) Hilfsspannung. Beide Spannungen hängen mit einer kleinen Abweichung übereinstimmend von der Temperatur der Transistoren T6 und T7 ab, so dass ihre Differenz, das ist die linearisierte ausgangsspannung an 17 (abgesehen von der kleinen Abweichung) temperaturunabhängig ist. Diese Abweichung entsteht, weil die beiden Spannungen ungleich sind, weshalb die Arbeitspunkte der als Dioden geschalteten Transistoren T6 und T7 an verschiedenen Stellen deren Charakteristik liegen. Zum Ausgleich dieser Abweichung dient der Kaltleiter K2.

**Patentansprüche**

1. Vorrichtung zur Abstandsmessung, mit einer Spule (L1), deren Dämpfung durch ein elektrisch leitfähiges Objekt (1) abhängig von dessen Abstand (a) von der Spule (L1) beeinflussbar ist, einer die Spule (L1) speisenden Hochfrequenzstromquelle (5) zur Erzeugung eines von der Dämpfung der Spule (L1) abhängigen Hochfrequenzsignals, einen Demodulator (D1, 12) zur Erzeugung eines Abstandssignals aus dem Hochfrequenzsignal, einer Gleichstromquelle (9), die einen dem Hochfrequenzstrom überlagerten Gleichstrom an die Spule (L1) liefert, zur Erzeugung eines durch den temperaturabhängigen Gleichstromwiderstand der Spule bestimmten Gleichstromsignals, und einer Schaltung (10, 14), die unter der Wirkung des Gleichstromsignals den Einfluss der Temperatur auf das Abstandssignal (a) kompensiert, dadurch gekennzeichnet, dass die Hochfrequenzstromquelle (5, 6) in Abhängigkeit vom Gleichstromsignal gesteuert ist, um den Einfluss der Temperatur der Spule (L1) auf das Hochfrequenzsignal zu kompensieren.

2. Vorrichtung nach Anspruch 1, dadurch gekennzeichnet, dass die Hochfrequenzstromquelle ein Oszillator (5) und die Spule die Schwingkreisspule (L1) des Oszillators (5) ist.

3. Vorrichtung nach Anspruch 2, dadurch gekennzeichnet, dass der Oszillator ein Colpitts-Oszillator (5) ist.

4. Vorrichtung nach Anspruch 1, dadurch gekennzeichnet, dass die Gleichstromquelle (9) einen konstanten Gleichstrom liefert, und dass der Gleichspannungsabfall an der Spule (L1) das Gleichstromsignal bildet.

5. Vorrichtung nach Anspruch 1, dadurch gekennzeichnet, dass das Gleichstromsignal die Gleichstromspeisung (6) der Hochfrequenzstromquelle (5) steuert, um den Einfluss der Temperatur auf das Hochfrequenzsignal zu kompensieren.

6. Vorrichtung nach Anspruch 1, dadurch gekennzeichnet, dass auf den Demodulator (D1, 12) ein Verstärker (13) und ein nichtlineares Glied (15) zum Linearisieren der Abhängigkeit des Signals vom Abstand (a) des Objekts (1) von der Spule (L1) folgen.

7. Vorrichtung nach Anspruch 6, dadurch gekennzeichnet, dass das nichtlineare Glied (15) eine von einer konstanten Gleichspannung gespeiste Reihenschaltung einer Diode (T6) und eines Widerstands (R49) hat, der mit dem Eingang und dem das Signal liefernden Ausgang des nichtlinearen Gliedes verbunden ist.

8. Vorrichtung nach Anspruch 6, dadurch gekennzeichnet, dass das nichtlineare Glied (15) zwei parallel an einer konstanten Spannung liegende Reihenschaltungen je einer Diode (T6, T7) und eines Widerstands (R49, R50) hat, dass einer dieser Widerstände (R49) mit dem Eingang des nichtlinearen Gliedes (15) und mit dem nicht invertierenden Eingang eines das Signal liefernden Verstärkers (07) und der andere Widerstand (R50) mit dem invertierenden Eingang dieses Verstärkers (16) verbunden ist.

9. Vorrichtung nach Anspruch 1, dadurch gekennzeichnet, dass ein Messkopf (23) die Spule (L1) und ein Netzwerk (D3, R60, C12; R61, C13) zur Erzeugung eines von der Temperatur des Messkopfes (23) abhängigen Gleichstromsignals enthält, und dass die Hochfrequenzstromquelle (6) in Abhängigkeit von diesen Gleichstromsignal gesteuert ist, um den Einfluss der Temperatur des Messkopfes auf das Hochfrequenzsignal zu kompensieren.

10. Vorrichtung nach Anspruch 9, dadurch gekennzeichnet, dass das Netzwerk (D3, R60, C12; R61, C13) in Reihe mit der Spule (L1) geschaltet ist, dass der Gleichstrom der Gleichstromquelle (9) durch diese Reihenschaltung fliesst, und konstant gehalten ist, und dass die Hochfrequenzstromquelle (6) in Abhängigkeit vom Gleichspannungsabfall an der Reihenschaltung gesteuert ist, um den Einfluss der Temperatur des Messkopfes (23) auf das Hochfrequenzsignal zu kompensieren.

## Claims

1. A device for distance measurement, with a coil (L1), the damping of which can be influenced by an electrically conductive object (1) as a function of its distance (a) from the coil (L1), a high-frequency current source (5) feeding the coil (L1), for generating a high-frequency signal dependent upon the damping of the coil (L1), a demodulator (D1, 12) for generating a distance signal from the high-frequency signal, a direct current source (9) which delivers to the coil (L1) a direct current superimposed on the high-frequency current, for generating a direct current signal which is determined by the temperature-dependent direct current resistance of the coil, and a circuit (10, 14) which under the influence of the direct current signal, compensates for the influence of the temperature on the distance signal (a), characterised in that the high-frequency current source (5, 6) is controlled as a function of the direct current signal in order to compensate for the influence of the temperature of the coil (L1) on the high-frequency signal.

2. A device according to Claim 1, characterised in that the high-frequency current source is an oscillator (5) and the coil is the oscillating circuit coil (L1) of the oscillator (5).

3. A device according to Claim 2, characterised in that the oscillator is a Colpitts oscillator (5).

4. A device according to Claim 1, characterised in that the direct current source (9) delivers a constant direct current and in that the drop in direct current voltage at the coil (L1) constitutes the direct current signal.

5. A device according to Claim 1, characterised in that the direct current signal controls the direct current feed (6) of the high-frequency current source (5) in order to compensate for the effect of the temperature on the high-frequency signal.

6. A device according to Claim 1, characterised in that the demodulator (D1, 12) is followed by an amplifier (13) and a non-linear member (15) for linearising the dependency of the signal upon the distance (a) of the object (1) from the coil (L1).

7. A device according to Claim 6, characterised in that the non-linear member (15) has, fed by a constant direct current voltage, a series circuit of a diode (T6) and a resistor (R49) which is connected to the input and to the signal-emitting output of the non-linear member.

8. A device according to Claim 6, characterised in that the non-linear member (15) has, parallel with a constant voltage, two series circuits to each diode (T6, T7) and a resistor (R49, R50) and in that one of these resistors (R49) is connected to the input of the non-linear member (15) and to the non-inverted input of a signal-emitting amplifier (O7) while the other resistor (R50) is connected to the inverting input of this amplifier (16).

9. A device according to Claim 1, characterised in that the measuring head (23) contains the coil (L1) and the mains unit (D3, R60, C12; R61, C13) for generating a direct current signal which is dependent upon the temperature of the measuring head (23) and in that the high-frequency current source (6) is controlled as a function of this direct current signal in order to compensate for the effect of the temperature of the measuring head on the high-frequency signal.

10. A device according to Claim 9, characterised in that the mains unit (D3, R60, C12; R61, C13) is connected in series with the coil (L1) and in that the direct current of the direct current source (9) flows through this series circuit and is maintained constant and in that the high-frequency current source (6) is controlled as a function of the drop in direct current voltage at the series circuit in order to compensate for the effect of the temperature of the measuring head (23) on the high-frequency signal.

**Revendications**

1. Dispositif de mesure de distance, comprenant une bobine (L1) dont l'amortissement peut être influencé par un objet électriquement conducteur (1) en fonction de sa distance (a) à la bobine (L1), une source (5) de courant à haute fréquence alimentant la bobine (L1) pour engendrer un signal de haute fréquence dépendant de l'amortissement de la bobine (L1), un démodulateur (D1, 12) pour engendrer un signal de distance à partir du signal de haute fréquence, une source de courant continu (9), qui envoie à la bobine (L1) un courant continu superposé au courant à haute fréquence pour engendrer un signal en courant continu défini par la résistance de la bobine au courant continue, dépendant de la température, et un circuit (10, 14) qui compense l'influence de la température sur le signal de distance (a) par l'effet du signal de courant continu, caractérisé en ce que la source de courant à haute fréquence (5, 6) peut être réglée en fonction du signal de courant continu pour compenser l'influence de la température de la bobine (L1) sur le signal à haute fréquence.

2. Dispositif selon la revendication 1, caractérisé en ce que la source de courant à haute fréquence est un oscillateur (5) et la bobine est la bobine (L1) du circuit oscillant de l'oscillateur (5).

3. Dispositif selon la revendication 2, caractérisé en ce que l'oscillateur est un oscillateur de Colpitts (5).

4. Dispositif selon la revendication 1, caractérisé en ce que la source de courant continu (9) fournit un courant continu constant et en ce que la chute de tension continue à la bobine (L1) constitue le signal de courant continu.

5. Dispositif selon la revendication 1, caractérisé en ce que le signal de courant continu règle l'alimentation (6) en courant continu de la source de courant à haute fréquence (5) afin de compenser l'influence de la température sur le signal à haute fréquence.

6. Dispositif selon la revendication 1, caractérisé en ce qu'un amplificateur (13) et un élément non linéaire (15) suivent le démodulateur (D1, 12) afin de rendre linéaire la relation entre le signal et la distance (a) de l'objet (1) à la bobine (L1).

7. Dispositif selon la revendication 6, caractérisé en ce que l'élément non linéaire (15) comporte un circuit en série, alimenté par une tension continue constante et formé d'une diode (D6) et d'une résistance (R49) qui est reliée à l'entrée de l'élément non linéaire et à la sortie de ce dernier qui fournit le signal.

8. Dispositif selon la revendication 6, caractérisé en ce que l'élément non linéaire (15) comporte, en parallèle, deux circuits en série raccordés à une tension constante, comportant chacun une diode (T6, T7) et une résistance (R49, R50), en ce que l'une de ces résistances (R49) est relié à l'entrée de l'élément non linéaire (15) et à l'entrée sans inversion d'un amplificateur (07) fournissant le signal et en ce que l'autre résistance (R50) est reliée à l'entrée à inversion de cet amplificateur (16).

9. Dispositif selon la revendication 1, caractérisé en ce qu'une tête de mesure (23) contient la bobine (L1) et un réseau (D3, R60, C12; R61, C13) pour engendrer un signal en courant continu dépendant de la température de la tête de mesure (23), et en ce que la source (6) de courant à haute fréquence est réglée en fonction de ce signal en courant continu pour compenser l'influence de la température de la tête de mesure sur le signal à haute fréquence.

10. Dispositif selon la revendication 9, caractérisé en ce que le réseau (D3, R60, C12; R61, C13) est monté en série avec la bobine (L1), en ce que le courant continu de la source (9) de courant continu traverse ce circuit en série et est maintenu constant, et en ce que la source (6) de courant à haute fréquence est réglée en fonction de la chute de tension continue dans le circuit en série pour compenser l'influence de la température de la tête de mesure (23) sur le signal à haute fréquence.

# Fig.1

# Fig.3    Fig.4    Fig.5

# Fig.2